# EUROPEAN PATENT SPECIFICATION

(11) **EP 3 546 788 B1**
(45) Date of publication and mention of the grant of the patent: **27.04.2022**
(21) Application number: 19164938.3
(22) Date of filing: 25.03.2019
(51) Int. Cl.: F16F 9/02, B62K 25/08, B62K 25/28, F16F 9/06, F16F 9/44, F16F 9/00

(54) **PNEUMATIC SPRING**
GASDRUCKFEDER
RESSORT PNEUMATIQUE

(30) Priority: 26.03.2018 IT 201800003955
(43) Date of publication of application: 02.10.2019
(73) Proprietor: FORMULA S.A.S. DI "FORMULA GROUP S.R.L." & C., 59100 Prato (PO) (IT)
(72) Inventor: Rossi, Luca, 50141 Firenze (IT)
(74) Representative: Nesti, Antonio

(56) References cited:
- EP-A2- 2 055 984
- BE-A6- 1 012 681
- FR-A1- 2 002 759
- US-A1- 2013 105 260
- US-B1- 8 123 006
- US-B1- 9 662 951

## Description

### Field of the Invention

The invention generally relates to a pneumatic spring and in particular to a pneumatic spring for forks or shock absorbers of vehicles such as bicycles or motorcycles.

### Background art

It is known that pneumatic springs are those elements which elastically connect two points, and which are generally comprised of a compression chamber engaged with a first point, such as the frame of a vehicle, and a piston slidable inside the compression chamber, engaged with a second point, such as the wheel hub of a vehicle.

The air, or pneumatic, spring is therefore, to sum up, a device comprised of a pressurized air chamber delimited by a piston which, moving along its axis, decreases the volume of this chamber. This causes the piston, when pushed, to produce an increase in pressure inside the chamber, thereby creating a force that pushes the piston back to its initial position.

It is also known that, when the displacement of the rod is faster, less energy is transferred to the outside by the system. This means that, as speed increases, the gas compression / expansion within the system increasingly follows the trend of the gas compression / expansion under adiabatic condition.

By contrast, by moving slowly, the system follows the trend of gas compression under isothermal condition.

Under an isothermal condition, the average elastic ratio of the spring is lower than the one under the adiabatic condition, and moreover, as speed increases, when the condition becomes adiabatic, there is a decrease in the hysteresis of the spring in the stroke / pressure cycle exerted on the piston by the air.

In the case of vehicle suspensions, the decrease in hysteresis at high deformation speeds is significant, especially on rough terrains characterized by deformation cycles in rapid succession.

Finally, it is known that, if a driver travels the same route with a spring suspension and an air suspension, the air suspension will seem to him much more "nervous" and uncontrollable compared to a steel helical spring suspension.

It is therefore needed a pneumatic spring which has a more predictable behaviour, basically similar to that of a steel helical spring.

As for suspensions, there is also the problem of increasing the end-of-stroke support provided by the spring to avoid end-of-stroke impacts (bottom out).

This result has been achieved by introducing a rigid volume spacer into the compression chamber which, by decreasing the available volume of air/gas, stiffens the elastic behaviour of the suspension at the end of stroke. However, this result clashes with the negative consequence of a reduction in the stroke available for the piston.

Furthermore, it is known that, when a greater support in the intermediate stages of the stroke is desired, the initial compression pressure may be increased, thus resulting, however, in simultaneously increasing the value of the elastic force at all stages of the stroke, thereby risking of having an excessively rigid suspension at the end of stroke.

From US8123006 a pneumatic suspension is known, which is provided with a positive chamber and a negative chamber connected by a bypass channel and also provided with an elastic volume compensator arranged in the positive chamber which, in combination with the bypass channel, tends to make the behaviour of the suspension more linear, the initial pressure being equal, *i.e.* to reduce the elastic coefficient of the suspension at the end of stroke.

From BE1012681 it is known a suspension system providing a gas compressed in a compression chamber in which a resiliently distortable body at least partially made of open closed foam is placed, the body having a thermal conductivity greater than that of the gas.

From US9662951 a method for protecting the suspension and frame of a vehicle is disclosed, the method including the use of a dumper with a piston member sliding in a cylinder where a resilient shock absorbing member is placed. US 2013 105 260 A1 discloses all the technical features of the preamble of appended claim 1, and the corresponding technical features of appended claim 8.

However, this solution does not solve the problem of obtaining a greater elastic support even in the intermediate stages of the compression stroke.

Currently, to overcome this drawback it is indeed necessary to increase the initial value of the pressure, with the known negative consequence of having a further increased rigidity of the suspension at the end of stroke.

### Object of the Invention

The object of the present invention is therefore to propose a pneumatic spring for suspensions, which, the elastic support provided at the end of stroke being equal, is capable of ensuring greater support during the compression of the suspension, without the need to raise the base value of the pressure in the cylinder.

A further object is to propose a pneumatic spring for suspensions, which overcomes the aforementioned drawbacks of the systems of the known type by reducing the increase in the elastic hysteresis of the spring as speeds increase, and thus making the hysteresis more constant and the pneumatic suspension more similar in its behaviour to a spring suspension, while keeping the advantages of the air spring, such as lightness and the possibility of easily changing the elastic ratio and the volume in the compression chamber.

Yet another object is to allow to modify the compression ratio of the suspension, while keeping the entire compression stroke available.

### Summary of the Invention

These and other purposes have been achieved by a pneumatic spring comprising a closed-cell elastomer body arranged so as to be free inside a compression chamber of the spring.

A first advantage is that, as the pressure in the compression chamber changes, the closed-cell structure of the elastomer determines a substantially elastic deformation associated with a viscous behaviour, sensitive in the spring expansion and elongation stage, due to the nature of the material itself. The presence of the two effects, the elastic and the viscous ones, variable as the chosen material and the size and / or shape of the elastomer body changes, therefore allows to adjust the behaviour of the spring according to requirements, especially in the case of forks.

A further advantage of the invention is that the behaviour of the suspension is improved in the case of terrains characterized by small roughness, since in the final compression cycles there is a reduction of the elastic springback force and therefore a greater adhesion of the wheel to the ground, due to the fact that in the elongation stage of the suspension the elastomer body tends to expand more slowly compared to the contraction speed experienced in the compression stroke, and therefore reduces the decrease in the elastic hysteresis of the suspension at high speeds.

A further advantage is that the available volume of the compression chamber remains substantially unchanged.

A further advantage, in the case of suspensions of cycles or motorcycles, is that the driver will benefit from good support at lower speeds or on less rough routes, but at the same time he will not have to suffer an increase in sudden nervousness when he will have to drive round tracks with impacts on obstacles at high speed, taking advantage from the constancy of the force provided by the suspension.

### List of Drawings

These and other advantages will be better understood by anyone skilled in the art from the description below and the accompanying drawings, given as a nonlimiting example, wherein:
- Figs.1a, 1b schematically show a pneumatic spring according to the invention in two configurations of use;
- Fig. 2 shows the pneumatic section of a fork for bicycles or motorcycles, comprising a spring according to the invention;
- Fig. 2a shows the pneumatic section of a second embodiment of a fork for bicycles or motorcycles, comprising a spring according to the invention;
- Fig. 2b schematically shows a fork for bicycles or motorcycles provided with a pneumatic spring according to the invention;
- Fig. 3 shows a shock absorber for bicycles or motorcycles, comprising a spring according to the invention;
- Fig. 4 shows a trend of the compression force/compression stroke elastic deformation cycle of a spring according to the invention and of a steel helical spring;
- Figs.5-5b show the variation of the compression force compared to the compression stroke in a pneumatic spring according to the invention in different configurations;

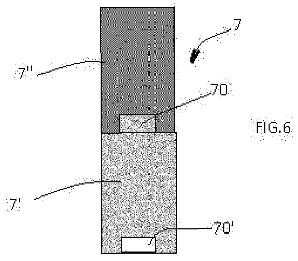

- Fig. 6 shows an elastomer body according to the invention in a modular configuration.

### Detailed Description

With reference to the accompanying drawings, a pneumatic spring for vehicle suspensions according to the invention, comprising a compression chamber 1 placed within a cylinder 2 provided with a first external attachment point 4, is described.

A pneumatic piston 3 with a pressure seal connected to a stem 5 which in turn is provided with a second attachment point 6 external to the cylinder 2 is slidable inside the chamber 1.

Preferably, the cylinder 2 is provided with a first valve 9 for injecting pressurized air into the chamber 1 and obtaining a resting pre-charge value of the chamber 1.

In the case of bicycles or motorcycles, the points 4, 6 are associated with a point in a wheel, such as the hub, and a point of the frame, such as a fork.

In the operation of the spring, an approaching stroke of the points 4 and 6 coincides with a reduction in the volume of the chamber 1 and an increase in the pneumatic pressure, which tends to push back the piston 3, moving away and returning the points 4 and 6 to their initial positions.

The piston 3 can therefore move between a resting configuration of the spring, wherein the internal pressure of the chamber 1 has a first value p1, and at least one compressed configuration of the spring corresponding to an approaching of the first and the second attachment points 4, 6 compared to the resting configuration, wherein the internal pressure of the chamber 1 assumes a second value p2, greater than said first value p1.

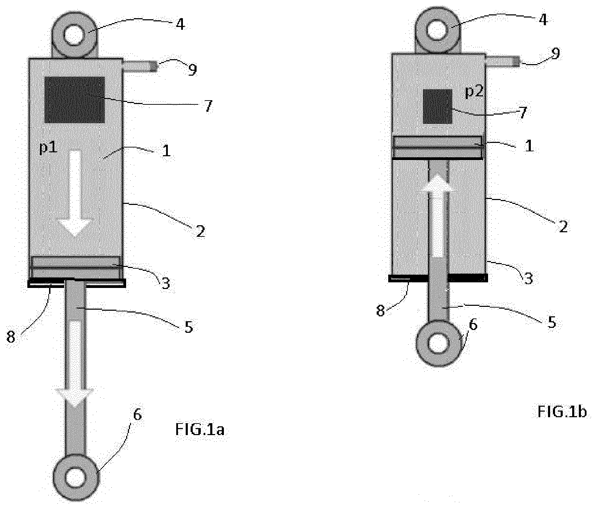

According to the invention, a closed-cell expanded elastomer body 7, is arranged inside the compression chamber 1, so as to be free, *i.e.* without any fixed engagement with other elements, being thus free to move inside the compression chamber and to contract elastically as the pressure in the chamber 1 increases (fig.1b), and to return to the initial conformation (fig.1a) as the pressure decreases.

Advantageously, the free elastomer body does not interact mechanically with any other solid part apart from being contained within the chamber in which it is inserted, thereby interacting only with the air or gas particles, which cause it to compress and expand depending on the pneumatic pressure.

Preferably, the elastomer body 7 has a cylindrical or hollow cylindrical shape, possibly made of several modular parts and also of different materials, for example parts made of closed-cell elastomer with different mechanical characteristics and / or non-deformable rigid parts.

By way of example, the body 7 can be made of the material POR 303/B RS marketed by Eurofoam Srl, an expanded elastomer with CR/NEOPRENE-based closed-cell cellular structure and a density of 160kg/m3.

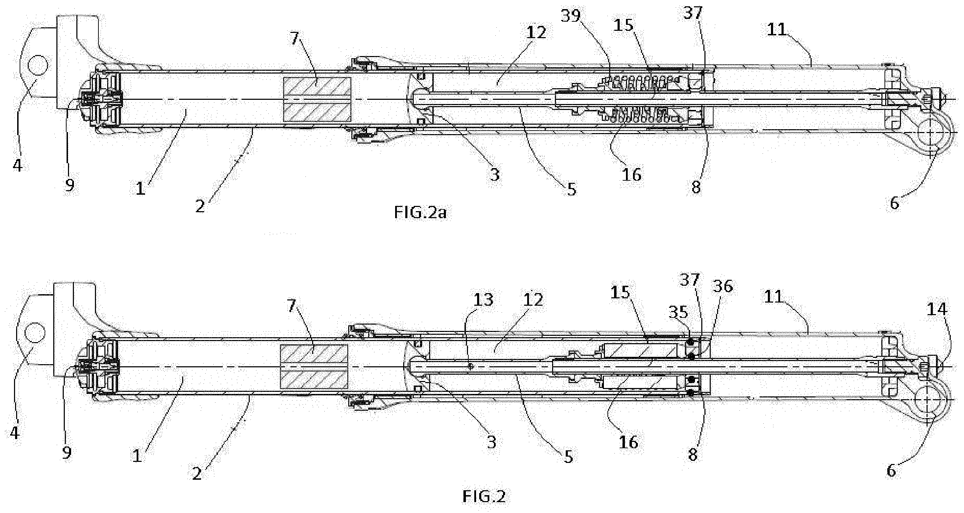

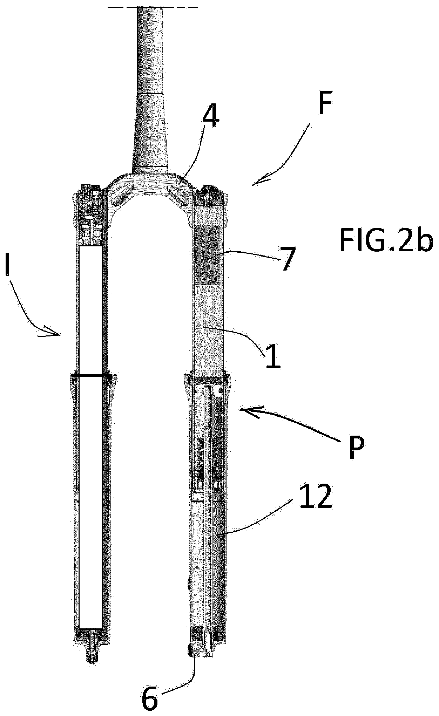

The spring of the invention can advantageously be used as a pneumatic spring in a pneumatic fork F for bicycles or motorcycles (Figs. 2, 2a, 2b) comprising a hydraulic section with viscous behaviour I, of the type known *per se,* schematised in Fig.2b, and a hydraulic section comprising a spring according to the invention and further provided with elastic means which are opposed to the elastic behaviour of the spring.

In the embodiment shown in Fig. 2, the cylinder 2 is mounted so as to be telescopically slidable with respect to an additional cylinder 11.

In the described example, the cylinder 2 slides with respect to the outer cylinder 11 or "leg" by means of a seal 35 mounted on a ring 37 which has an additional seal 36 resting on the outer surface of the stem 5.

The cylinder 11 is also integral with the second attachment point 6 of the stem 5, and the piston 3 is arranged in an intermediate position inside the cylinder 2 between the first compression chamber 1, referred to as a positive chamber, and a second compression chamber 12, referred to as a negative chamber, which has an opposing behaviour with respect to the positive chamber 1

In particular, the internal pressure of the negative chamber 12 has a first value p3 at the resting configuration of the spring and assumes a second value p4 greater than said first value p3 in an extended configuration of the spring corresponding to a spacing of the first and second attachment points 4, 6 compared to the resting configuration.

Preferably, the fork F comprises a second valve 14 which can be accessed externally and communicates with the second compression chamber 12 via a cavity 15 and a hole 13 of the stem 5 to introduce pressurized air into said second chamber 12 and obtain a resting pre-charge value of the pressure of the chamber 12.

Moreover, the fork F may comprise an end-of-stroke block 16 arranged within the second compression chamber 12.

Fig. 2a illustrates a further embodiment (known *per se)* of a fork provided with the spring of the invention. In this case, the ring 37 is not provided with seals with respect to the stem 5 and the cylinder 11, the chamber 12 does not act as a negative chamber, and its opposing effect with respect to the pneumatic spring is exerted by a helical spring 38, (compressed in the configuration of Fig. 2a) fixed to a bushing 39 integral with the stem 5 and abutting the ring 37.

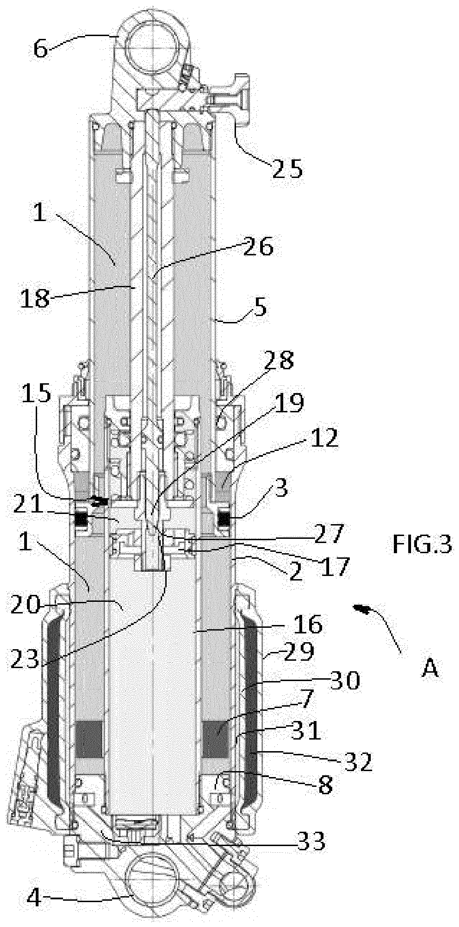

Advantageously, the spring of the invention can be used in a shock absorber A for bicycles or motorcycles, illustrated schematically in Figure 3.

The shock absorber A comprises a hydraulic cartridge 15 provided with a hydraulic cylinder 16 filled with a viscous fluid and connected to a first of the attachment points 4, 6, and a hydraulic piston 17 connected by means of a stem 18 to the second attachment point 4, 6 and slidable in said hydraulic cylinder 16 between two sections 20, 21 of the cylinder 16 separated by a fluid passage 23, so that, in response to a movement consisting of moving away or approaching the points 4, 6, the piston moves in the cylinder and the fluid is forced to pass through the passage 23 by resisting the mutual movement of the attachment points 4, 6.

Preferably, the shock absorber A comprises a valve 19 for adjusting the fluid flow through the passage 23, comprised of, for example, a rod 26 with a conical end 27 facing the passage 23 and connected to an adjustment knob 25 accessible externally by the shock absorber so as to be moved away from or approached to the passage and, therefore, to open or close the available clearance of the passage itself.

In the described embodiment, the stem 5 of the pneumatic piston 3 has the shape of a hollow cylinder inside which the hydraulic cylinder 16 can slide and which forms part of the compression chamber 1.

In this example, moreover, the stem 5 slides sealingly with respect to the cylinder 2 by means of a further outer gasket 28 mounted on the cylinder 2 so that the pneumatic piston 3 is included between the chamber 1, acting as a positive chamber, and a section 12 of the cylinder 2 comprised between the piston 3 and the gasket 28, acting as a negative compression chamber.

A flange 42, fixed to a spring 41 (compressed in Fig. 3) placed in abutment of a ring 43 and acting, in operation, as a negative spring opposing the compression chamber 1, is also mounted on the stem 18

Finally, the shock absorber A may be provided with a hydraulic compensating chamber 29, which in the described example is arranged concentrically to the cylinder 2 and comprises a membrane 30 comprised between a first region 31, filled with viscous fluid and communicating through conduits 33 with chamber 20 of the cylinder 16, and a second region 32, for example filled with pressurized gas, and the containment wall of the compensating chamber.

In operation, known *per se,* the membrane 30 is capable of expanding elastically as the pressure of the fluid in the region 31 increases, receiving a back pressure from the gas region 32, the amount of which will depend on the pre-charge pressure of the region 32 itself applied through a valve 40 communicating with the region 32.

In possible embodiments, the cylinder 2 has an end with an closure 8 that can be opened for inserting and/or replacing the body 7 in the chamber 1, and/or for inserting into the cylinder 2 a further rigid volume reducing body 10, of the type known *per se* and used to raise the end-of-stroke elastic support force of a pneumatic spring.

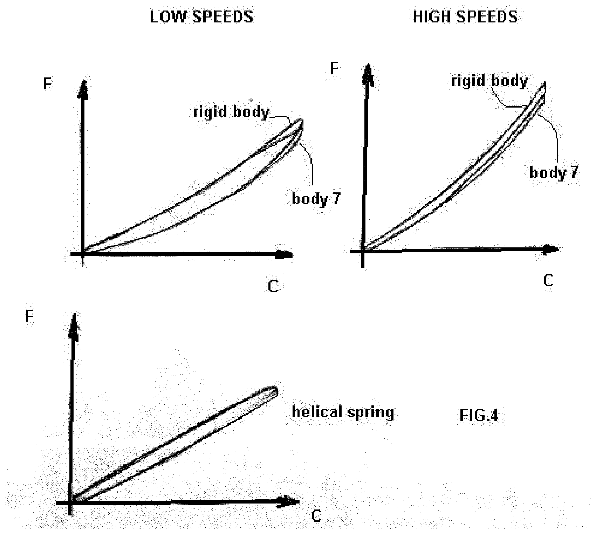

Figure 4 illustrates schematically the trend of the stroke/elastic return force elastic deformation cycle, which represents the elastic hysteresis of a spring according to the invention.

In particular, Fig. 4 represents the hysteresis which occurs in the elastic cycle of the pneumatic spring of the invention with the elastomer body 7 (cycle of the Elastic force F/stroke C curve of the piston) provided with a rigid volume spacer (at operating pressures), measured both at low speeds and at high speeds compared to that of a steel helical spring (the hysteresis of the steel springs does not vary with the compression speed).

The chart shows that at high speeds the reduction of the elastic hysteresis of the spring of the invention is less than that of the conventional spring, *i.e.* the pneumatic spring provided with the body 7 tends to have a more regular elastic hysteresis, similar to that of the helical spring, which does not vary with the speed of the stroke, thus being more predictable and regular.

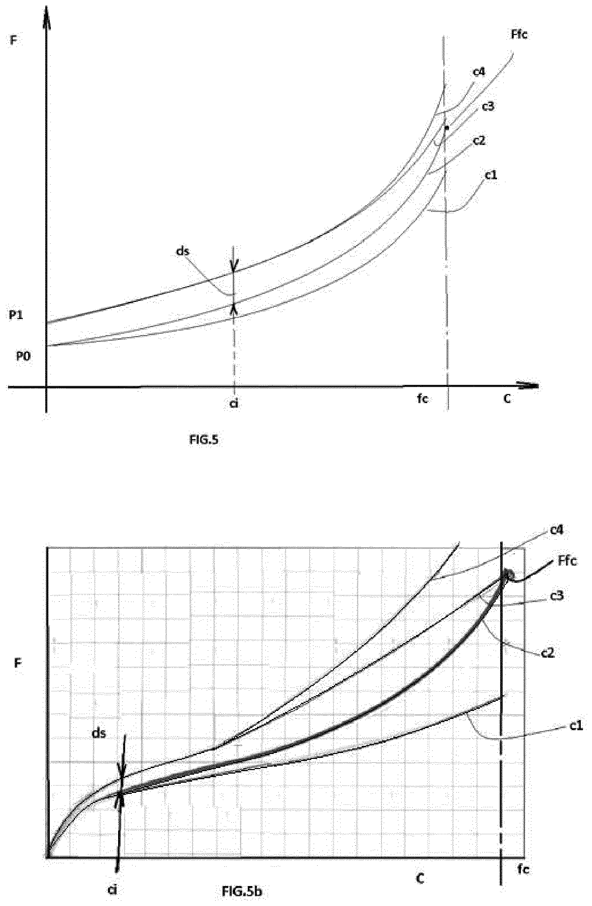

Fig.5 shows charts which qualitatively represent the trend of the F/C elastic curve in the following cases:
c1: initial pressure P0, absence of both a rigid spacer and an elastomer body 7;
c2: introduction of a rigid volume spacer to increase the elastic support force at the end-of-stroke point fc and obtain a desired Ffc value;
c3: increase of the initial pressure to the value P1>P0 in the presence of a rigid spacer to increase by a desired quantity (ds) the value of the elastic support provided by the suspension at an intermediate point (ci) of the stroke;
c4: replacement of the rigid spacer with a body 7 and initial pressure P1, to maintain the desired increase of the support (ds) and reduce the end-of-stroke rigidity to a value close to the desired value of the end-of-stroke force Ffc.

Figure 5b shows the trends of the same deformation force curves, represented in the case of a fork provided with a positive chamber and a negative chamber (or negative spring) wherein, therefore, as the initial pressure in the compression chamber changes, the initial value of the elastic force provided by the fork remains the balance value between the two chambers.

The invention has important advantages, since the closed-cell elastomer body 7 allows to modify the elastic curve of the spring thus obtaining greater flexibility and allowing the user to adapt the response of the suspension to its own sensitivity and to the characteristics of the terrain.

Moreover, the invention allows several parts 7', 7" to be combined modularly, for example through interlocking portions 70', 70, possibly made of different materials to exploit different elastic properties of the selected materials The present invention has been described according to preferred embodiments; however, equivalent variants can be conceived without departing from the scope of the present invention.

## Claims

1. Shock absorber for bicycles or motorcycles comprising a hydraulic cartridge (15) provided with
a hydraulic cylinder (16) filled with a viscous fluid and connected to a first external attachment point (4)
a hydraulic piston (17) connected by a stem (18) to a second attachment point (6) and slidable in said hydraulic cylinder (16)
a fluid passage (23) for passing a quantity of viscous fluid from a first section (20) to a second section (21) of the hydraulic cylinder (16) in response and opposing resistance to a reciprocal movement of said attachment points (4, 6).
the shock absorber further comprising a pneumatic spring for vehicle suspensions including,
at least one compression chamber (1) within a pneumatic spring cylinder (2) provided with said first external attachment point (4),
a sliding pneumatic piston (3) with a pressure seal in the chamber and connected to a stem (5) provided with said second attachment point (6) outside the cylinder (2),
wherein said pneumatic spring comprises a closed-cell elastomer body (7) arranged inside the compression chamber (1), said piston (3) being able to move between a resting configuration of the spring wherein the internal pressure of the chamber (1) has a first value (p1) and at least one compressed spring configuration corresponding to an approach of the first and second attachment points (4, 6) with respect to the resting configuration, wherein the internal pressure of the chamber (1) takes a second value (p2), greater than said first value (p1), wherein in response to said second value (p2) said elastomer body (7) assumes an elastically deformed contracted configuration, and returns to the resting configuration as the pressure decreases, showing a substantially elastic deformation associated with a viscous behaviour, **characterised in that** said elastomer body (7) is free to move inside the compression chamber (1).

2. Shock absorber according to claim 1, wherein said pneumatic spring cylinder (2) has one end with a closure (8) that can be opened for insertion and/or replacement of said elastomer body (7) in the chamber (1).

3. Shock absorber according to one of the preceding claims, wherein said pneumatic spring cylinder (2) is provided with a first valve (9) for the introduction of pressurized air into the chamber (1).

4. Shock absorber according to one of the preceding claims, wherein said elastomer body (7) is of hollow cylindrical shape.

5. Shock absorber according to one of the preceding claims, wherein said elastomer body (7) comprises several modular parts (7', 7").

6. Shock absorber according to claim 5, wherein said modular parts are made of different materials.

7. Shock absorber according to claim 1, comprising a compensating hydraulic chamber (29) provided with a membrane (30) comprised between a first region (31) communicating through conduits (33) with the chamber (20) of the cylinder (16) and a second region (32) filled with pressurized gas.

8. Pneumatic fork for bicycles or motorcycles having a hydraulic section (I) with viscous behaviour and a pneumatic section (P) comprising a pneumatic spring for vehicle suspensions including,
at least one compression chamber (1) within a pneumatic spring cylinder (2) provided with a first external attachment point (4),
a sliding pneumatic piston (3) with a pressure seal in the chamber and connected to a stem (5) provided with a second attachment point (6) outside the pneumatic spring cylinder (2),
a closed-cell elastomer body (7) arranged inside the compression chamber (1),
said piston (3) being able to move between a resting configuration of the spring wherein the internal pressure of the chamber (1) has a first value (p1) and at least one compressed spring configuration corresponding to an approach of the first and second attachment points (4, 6) with respect to the resting configuration, wherein the internal pressure of the chamber (1) takes a second value (p2), greater than said first value (p1), wherein in response to said second value (p2) said elastomer body (7) assumes an elastically deformed contracted configuration, and returns to the resting configuration as the pressure decreases, showing a substantially elastic deformation associated with a viscous behaviour,
said elastomer body (7) being free to move inside the compression chamber (1),
wherein said pneumatic spring cylinder (2) is mounted sliding telescopically with respect to a further cylinder (11) integral to the second attachment point (6) of the stem (5), and wherein said piston (3) is arranged in an intermediate position inside the pneumatic spring cylinder (2) between said first compression chamber (1) and a second chamber (12) provided with elastic means which are opposed to the elastic behaviour of the spring.

## Patentansprüche

1. Stoßdämpfer für Fahrräder oder Motorräder, umfassend eine hydraulische Patrone (15), die mit Folgendem versehen ist:
einem Hydraulikzylinder (16), der mit einem viskosen Fluid gefüllt ist und mit einem ersten externen Montagepunkt (4) verbunden ist,
einem Hydraulikkolben (17), der durch einen Schaft (18) mit einem zweiten Montagepunkt (6) verbunden ist und im Hydraulikzylinder (16) gleitbar ist,
einem Fluiddurchgang (23) zum Durchführen einer Menge von viskosem Fluid von einem ersten Teilabschnitt (20) zu einem zweiten Teilabschnitt (21) des Hydraulikzylinders (16) in Reaktion auf und gegen den Widerstand gegen eine Hin- und Herbewegung der Montagepunkte (4, 6)
wobei der Stoßdämpfer ferner eine Gasfeder für Fahrzeugaufhängungen umfasst, enthaltend
zumindest eine Kompressionskammer (1) innerhalb eines Gasfederzylinders (2), der mit dem ersten Montagepunkt (4) versehen ist,
einen gleitenden Pneumatikkolben (3) mit einer Druckdichtung in der Kammer, der mit einem Schaft (5) verbunden ist, welcher mit dem zweiten Montagepunkt (6) außerhalb des Zylinders (2) verbunden ist,
wobei die Gasfeder einen geschlossenzelligen Elastomerkörper (7) umfasst, der innerhalb der Kompressionskammer (1) angeordnet ist, wobei der Kolben (3) dazu imstande ist, sich zwischen einer Ruhekonfiguration der Feder, in der der Innendruck der Kammer (1) einen ersten Wert (p1) aufweist, und zumindest einer komprimierten Federkonfiguration zu bewegen, die einer Annäherung des ersten und zweiten Montagepunkts (4, 6) bezüglich der Ruhekonfiguration entspricht, wobei der Innendruck der Kammer (1) einen zweiten Wert (p2) annimmt, der größer als der erste Wert (p1) ist, wobei der Elastomerkörper (7) in Reaktion auf den zweiten Wert (p2) eine elastisch verformte, zusammengezogene Konfiguration annimmt und in die Ruhekonfiguration zurückkehrt, wenn der Druck abnimmt, wobei er eine im Wesentlichen elastische Verformung aufweist, die einem viskosen Verhalten zugeordnet ist, **dadurch gekennzeichnet, dass** der Elastomerkörper (7) frei zur Bewegung innerhalb der Kompressionskammer (1) ist.

2. Stoßdämpfer nach Anspruch 1, wobei der Gasfederzylinder (2) ein Ende mit einem Verschluss (8) aufweist, der zur Einführung und/oder zum Austausch des Elastomerkörpers (7) in der Kammer (1) geöffnet werden kann.

3. Stoßdämpfer nach einem der vorhergehenden Ansprüche, wobei der Gasfederzylinder (2) mit einem ersten Ventil (9) zur Einleitung von Druckluft in die Kammer (1) versehen ist.

4. Stoßdämpfer nach einem der vorhergehenden Ansprüche, wobei der Elastomerkörper (7) eine hohle zylindrische Form aufweist.

5. Stoßdämpfer nach einem der vorhergehenden Ansprüche, wobei der Elastomerkörper (7) mehrere modulare Teile (7', 7") umfasst.

6. Stoßdämpfer nach Anspruch 5, wobei die modularen Teile aus unterschiedlichen Materialien hergestellt sind.

7. Stoßdämpfer nach Anspruch 1, umfassend eine ausgleichende Hydraulikkammer (29), die mit einer Membran (30) versehen ist, welche zwischen einem ersten Bereich (31), der über Leitungen (33) mit der Kammer (20) des Zylinders (16) in Verbindung steht, und einem zweiten Bereich (32), der mit Druckgas gefüllt ist, beinhaltet ist.

8. Pneumatische Gabel für Fahrräder oder Motorräder mit einem hydraulischen Teilabschnitt (I) mit viskosem Verhalten und einem pneumatischen Teilabschnitt (P), der eine Gasfeder für Fahrzeugaufhängungen umfasst, enthaltend
zumindest eine Kompressionskammer (1) innerhalb eines Gasfederzylinders (2), der mit einem ersten externen Montagepunkt (4) versehen ist,
einen gleitenden Pneumatikkolben (3) mit einer Druckdichtung in der Kammer, der mit einem Schaft (5) verbunden ist, welcher mit dem zweiten Montagepunkt (6) außerhalb des Gasfederzylinders (2) verbunden ist,
einen geschlossenzelligen Elastomerkörper (7), der innerhalb der Kompressionskammer (1) angeordnet ist,
wobei der Kolben (3) dazu imstande ist, sich zwischen einer Ruhekonfiguration der Feder, in der der Innendruck der Kammer (1) einen ersten Wert (p1) aufweist, und zumindest einer komprimierten Federkonfiguration zu bewegen, die einer Annäherung des ersten und zweiten Montagepunkts (4, 6) bezüglich der Ruhekonfiguration entspricht, wobei der Innendruck der Kammer (1) einen zweiten Wert (p2) annimmt, der größer als der erste Wert (p1) ist, wobei der Elastomerkörper (7) in Reaktion auf den zweiten Wert (p2) eine elastisch verformte, zusammengezogene Konfiguration annimmt und in die Ruhekonfiguration zurückkehrt, wenn der Druck abnimmt, wobei er eine im Wesentlichen elastische Verformung aufweist, die einem viskosen Verhalten zugeordnet ist,
wobei der Elastomerkörper (7) frei zur Bewegung innerhalb der Kompressionskammer (1) ist,
wobei der Gasfederzylinder (2) teleskopartig gleitend bezüglich eines weiteren Zylinders (11) angebracht ist, welcher mit dem zweiten Montagepunkt (6) des Schafts (5) einstückig ist, und wobei der Kolben (3) in einer zwischenliegenden Position innerhalb des Gasfederzylinders (2) zwischen der ersten Kompressionskammer (1) und einer zweiten Kammer (12) angeordnet ist, die mit elastischen Mitteln versehen ist, welche dem elastischen Verhalten der Feder entgegengesetzt sind.

## Revendications

1. Amortisseur de chocs pour bicyclettes ou motocyclettes comprenant une cartouche hydraulique (15) pourvue de :
un cylindre hydraulique (16) rempli d'un fluide visqueux et relié à un premier point de raccordement externe (4),
un piston hydraulique (17) relié par une tige (18) à un second point de raccordement (6) et pouvant coulisser dans ledit cylindre hydraulique (16),
un passage de fluide (23) pour faire passer une quantité de fluide visqueux depuis une première section (20) jusqu'à une seconde section (21) du cylindre hydraulique (16) en réponse et en résistance opposée à un mouvement de va-et-vient desdits points de raccordement (4, 6),
l'amortisseur de chocs comprenant en outre un ressort pneumatique pour des suspensions de véhicule incluant :
au moins une chambre de compression (1) à l'intérieur du cylindre de ressort pneumatique (2) pourvue dudit premier point de raccordement externe (4),
un piston pneumatique coulissant (3) avec un joint de pression dans la chambre et relié à une tige (5) pourvue dudit second point de raccordement (6) à l'extérieur du cylindre (2),
dans lequel ledit ressort pneumatique comprend un corps élastomère à cellules fermées (7) agencé à l'intérieur de la chambre de compression (1), ledit piston (3) étant apte à se déplacer entre une configuration de repos du ressort dans laquelle la pression interne de la chambre (1) a une première valeur (p1) et au moins une configuration de ressort compressé correspondant à une approche des premier et second points de raccordement (4, 6) par rapport à la configuration de repos dans laquelle la pression interne de la chambre (1) prend une seconde valeur (p2) supérieure à ladite première valeur (p1), dans lequel, en réponse à ladite seconde valeur (p2), ledit corps élastomère (7) adopte une configuration contractée élastiquement déformée, et revient à la configuration de repos au fur et à mesure que la pression diminue, en présentant une déformation sensiblement élastique associée à un comportement visqueux, **caractérisé en ce que** ledit corps élastomère (7) est libre de se déplacer à l'intérieur de la chambre de compression (1).

2. Amortisseur de chocs selon la revendication 1, dans lequel ledit cylindre de ressort pneumatique (2) a une extrémité avec une fermeture (8) qui peut être ouverte pour une insertion et/ou un remplacement dudit corps élastomère (7) dans la chambre (1).

3. Amortisseur de chocs selon l'une des revendications précédentes, dans lequel ledit cylindre de ressort pneumatique (2) est pourvu d'une première vanne (9) pour l'introduction d'air pressurisé dans la chambre (1).

4. Amortisseur de chocs selon l'une des revendications précédentes, dans lequel ledit corps élastomère (7) est de forme cylindrique creuse.

5. Amortisseur de chocs selon l'une des revendications précédentes, dans lequel ledit corps élastomère (7) comprend plusieurs parties modulaires (7', 7").

6. Amortisseur de chocs selon la revendication 5, dans lequel lesdites parties modulaires sont constituées de matériaux différents.

7. Amortisseur de chocs selon la revendication 1, comprenant une chambre hydraulique de compensation (29) pourvue d'une membrane (30) comprise entre une première région (31) communiquant à travers des conduits (33) avec la chambre (20) du cylindre (16) et une seconde région (32) remplie de gaz pressurisé.

8. Fourche pneumatique pour bicyclettes ou motocyclettes comportant une section hydraulique (I) avec un comportement visqueux et une section pneumatique (P) comprenant un ressort pneumatique pour des suspensions de véhicule incluant :
au moins une chambre de compression (1) à l'intérieur d'un cylindre de ressort pneumatique (2) pourvu d'un premier point de raccordement externe (4),
un piston pneumatique coulissant (3) avec un joint de pression dans la chambre et relié à une tige (5) pourvue d'un second point de raccordement (6) à l'extérieur du cylindre de ressort pneumatique (2),
un corps élastomère à cellules fermées (7) agencé à l'intérieur de la chambre de compression (1),
ledit piston (3) étant apte à se déplacer entre une configuration de repos du ressort dans laquelle la pression interne de la chambre (1) a une première valeur (p1) et au moins une configuration de ressort compressé correspondant à une approche des premier et second points de raccordement (4, 6) par rapport à la configuration de repos dans laquelle la pression interne de la chambre (1) prend une seconde valeur (p2) supérieure à ladite première valeur (p1), dans laquelle, en réponse à ladite seconde valeur (p2), ledit corps élastomère (7) adopte une configuration contractée élastiquement déformée, et revient à la configuration de repos au fur et à mesure que la pression diminue, en présentant une déformation sensiblement élastique associée à un comportement visqueux,
ledit corps élastomère (7) étant libre de se déplacer à l'intérieur de la chambre de compression (1),
dans laquelle ledit cylindre de ressort pneumatique (2) est monté en coulissement télescopique par rapport à un autre cylindre (11) solidaire du second point de raccordement (6) de la tige (5), et dans lequel ledit piston (3) est agencé à une position intermédiaire à l'intérieur du cylindre de ressort pneumatique (2) entre ladite première chambre de compression (1) et une seconde chambre (12) pourvue de moyens élastiques qui sont opposés au comportement élastique du ressort.
